# EUROPEAN PATENT APPLICATION

(11) **EP 4 340 248 A1**
(43) Date of publication of application: **20.03.2024**
(21) Application number: 21952331.3
(22) Date of filing: 05.08.2021
(51) Int. Cl.: H04B 7/06, H04B 7/08

(54) **COMMUNICATION METHOD, TERMINAL DEVICE, NETWORK DEVICE, AND COMMUNICATION SYSTEM**

(71) Applicant: GUANGDONG OPPO MOBILE TELECOMMUNICATIONS CORP., LTD., Dongguan, Guangdong 523860 (CN)
(72) Inventor: YOU, Xin, Dongguan, Guangdong 523860 (CN)
(74) Representative: Novagraaf Technologies
(86) International application number: PCT/CN2021/110980
(87) International publication number: WO 2023/010441

(57) **Abstract**

The present application relates to a communication method, a terminal device, a network device, and a communication system. The communication method can be applied to a terminal device. The method comprises: when a beam failure of a transmission and reception point (TRP) is detected, triggering a scheduling request (SR), which is used for beam failure recovery (BFR) of the TRP.

## Description

### TECHNICAL FIELD

The present disclosure relates to the field of communication, in particular to a communication method, a terminal device, a network device and a communication system.

### BACKGROUND

In order to meet the current requirements for speed, delay, high-speed mobility, power efficiency, etc., and to cope with the diversity and complexity of services in future life, 3rd Generation Partnership Project (3GPP) International Standards Organization began to develop the 5th Generation (5G) mobile communication technology. The main application scenarios of 5G include enhanced Mobile Broadband (eMBB), Ultra Reliability and Low Latency Communication (URLLC) and Massive Machine Type Communication (mMTC).

### SUMMARY

The embodiments of the present disclosure provide a communication method, a terminal device, a network device and a communication system.

The embodiments of the present disclosure provide a communication method. The method includes: triggering, in response to a beam failure of a Transmission and Reception Point (TRP) being detected, a Scheduling Request (SR) for a Beam Failure Recovery (BFR) of the TRP.

The embodiments of the present disclosure provide a communication method. The method includes: receiving a SR for a BFR of a TRP. The SR is triggered by a terminal device in response to a beam failure of the TRP being detected.

The embodiments of the present disclosure provide a terminal device including a processor. The processor is configured to trigger a SR for a BFR of a TRP in response to a beam failure of the TRP being detected.

The embodiments of the present disclosure provide a network device including a transceiver. The transceiver is configured to receive a SR for a BFR of a TRP. The SR is triggered by a terminal device in response to a beam failure of the TRP being detected.

The embodiments of the present disclosure provide a terminal device including a transceiver, a processor and a memory. The memory is configured to store a computer program, and the processor is configured to invoke and run the computer program stored in the memory to perform the communication method executed by the terminal device.

The embodiments of the present disclosure provide a network device including a transceiver, a processor and a memory. The memory is configured to store a computer program, and the processor is configured to invoke and run the computer program stored in the memory to perform the communication method executed by the network device.

The embodiments of the present disclosure provide a communication system. The communication system includes at least one above terminal device, and at least one above network device.

The embodiments of the present disclosure provide a chip for implementing the above communication method.

Specifically, the chip includes a processor for invoking and running a computer program from a memory to cause a device on which the chip is mounted to perform the above communication method.

The embodiments of the present disclosure provide a computer-readable storage medium for storing a computer program that causes a computer to perform the above communication method.

The embodiments of the present disclosure provide a computer program product including computer program instructions that cause a computer to perform the above communication method.

The embodiments of the present disclosure provide a computer program that, when run on a computer, causes the computer to perform the above communication method.

The present disclosure provides a solution about how to trigger a SR for the BFR of the TRP in case that for the BFR of the TRP, each cell may be configured with multiple PUCCH resources (e.g. two PUCCH resources). Thus, the SR can be triggered in case that the uplink resource is insufficient, thereby obtaining the required uplink resource and realizing the BFR of TRP.

### BRIEF DESCRIPTION OF THE DRAWINGS

FIG. 1 is a schematic diagram of an application scenario according to embodiments of the present disclosure.
FIG. 2 is a schematic flow chart of a communication method according to an embodiment of the present disclosure.
FIG. 3 is a schematic flow chart of a communication method according to another embodiment of the present disclosure.
FIG. 4 is a schematic flow chart of a communication method according to another embodiment of the present disclosure.
FIG. 5 is a schematic flow chart of a communication method according to another embodiment of the present disclosure.
FIG. 6 is a schematic flow chart of a communication method according to another embodiment of the present disclosure.
FIG. 7 is a schematic block diagram of a terminal device according to an embodiment of the present disclosure.
FIG. 8 is a schematic block diagram of a network device according to an embodiment of the present disclosure.
FIG. 9 is a schematic block diagram of a communication device according to an embodiment of the present disclosure.
FIG. 10 is a schematic block diagram of a chip according to an embodiment of the present disclosure.
FIG. 11 is a schematic block diagram of a communication system according to an embodiment of the present disclosure.

### DETAILED DESCRIPTION

The technical solutions in the embodiment of the present disclosure will be described below with reference to the drawings in the embodiment of the present disclosure.

The technical solutions of the embodiments of the present disclosure may be applied to various communication systems, such as: Global System of Mobile communication (GSM) system, Code Division Multiple Access (CDMA) system, Wideband Code Division Multiple Access (WCDMA) system, General Packet Radio Service (GPRS), Long Term Evolution (LTE) system, Advanced long term evolution (LTE-A) system, New Radio (NR) system, evolution system of NR system, and LTE-based access to unlicensed spectrum (LTE-U) system, NR-based access to unlicensed spectrum (NR-U) system, Universal Mobile Telecommunication System (UMTS), Wireless Local Area Networks (WLAN), Wireless Fidelity (WiFi), 5th-Generation (5G) system or other communication systems.

In general, conventional communication systems support a limited number of connections and are easy to implement. However, with the development of communication technology, mobile communication systems will not only support conventional communication, but also support, for example, Device to Device (D2D) communication, Machine to Machine (M2M) communication, Machine Type Communication (MTC), Vehicle to Vehicle (V2V) communication, etc. The embodiments of the present disclosure may also be applied to these communication systems.

Alternatively, the communication system in the embodiment of the present disclosure may be applied to a Carrier Aggregation (CA) scenario, a Dual Connectivity (DC) scenario, and a Standalone (SA) network distribution scenario.

The applied spectrum is not limited in the embodiments of the present disclosure. For example, the embodiments of the present disclosure may be applied to a licensed spectrum or an unlicensed spectrum.

The embodiments of the present disclosure are described in connection with a network device and a terminal device. The terminal device may also be referred to as a User Equipment (UE), an access terminal, a subscriber unit, a subscriber station, a mobile station, a mobile stage, a remote station, a remote terminal, a mobile device, a user terminal, a terminal, a wireless communication device, a user agent or a user device, etc. The terminal device may be a STAION (ST) in a WLAN, a cellular telephone, a cordless telephone, a Session Initiation Protocol (SIP) telephone, a Wireless Local Loop (WLL) station, a Personal Digital Processing (PDA) device, a handheld device having a wireless communication function, a computing device or other processing device connected to a wireless modem, a vehicle-mounted device, a wearable device, and a next generation communication system, such as a terminal device in an NR network or a terminal device in a future evolved Public Land Mobile Network (PLMN) network.

By way of example and not limitation, the terminal device in the embodiments of the present disclosure may also be a wearable device. The wearable device may also be called as a wearable intelligent device, which is a general name of wearable devices developed by applying wearable technology to intelligently design daily wears, such as glasses, gloves, watches, clothing and shoes. The wearable device is a portable device that is worn directly on the body or integrated into the clothes or accessories of user. The wearable device is not only a kind of a hardware device, but may also realize powerful functions through software support, data interaction and cloud interaction. Generalized wearable smart device has features of full functions, large size and implementation of complete or partial functions without relying on smart phones, such as smart watches or smart glasses, and of only focusing on certain application functions, being used in conjunction with other devices such as smart phones, such as various smart bracelets and smart jewelry for monitoring physical signs.

The network device may be a device for communicating with a mobile device. The network device may be an Access Point (AP) in a WLAN, a Base Transceiver Station (BTS) in a GSM or CDMA, a base station (NodeB, NB) in a WCDMA, an Evolutional Node B (eNB or eNodeB) in an LTE, a relay station or an AP, a vehicle-mounted device, a wearable device, a network device (gNB) in a NR network or a network device in a future evolved PLMN network, etc.

In the embodiments of the present disclosure, the network device provides services for a cell, and the terminal device communicates with the network device through a transmission resource (e.g. a frequency domain resource, or a spectrum resource) used by the cell. The cell may be a cell corresponding to the network device (e.g. base station), and the cell may belong to a macro base station or a base station corresponding to a Small cell. The Small cell may include a Metro cell, a Micro cell, a Pico cell, a Femto cell, etc. These Small cells have the characteristics of small coverage and low transmission power, and are suitable for providing high-speed data transmission services.

It should be understood that the "indicate" mentioned in embodiments of the present disclosure may be a direct indication, may be an indirect indication, or may be represent an association. For example, the expression that A indicates B may mean that A directly indicates B, for example, B may be obtained through A. The expression may also mean that A indirectly indicates B, for example, A indicates C, and B may be obtained by C. The expression may also indicate that there is an association between A and B.

In the description of embodiments of the present disclosure, the term "correspondence" may mean that there is a direct correspondence or an indirect correspondence between the two objects, may also mean that there is an association between the two objects, may also be a relationship of indicating and being indicated, configuring and being configured, etc.

In order to facilitate understanding of the technical solutions of the embodiments of the present disclosure, the related technologies of the embodiments of the present disclosure are described below. The following related technologies, as an alternative solution, may be arbitrarily combined with the technical solutions of the embodiments of the present disclosure, all of which fall within the protection scope of the embodiments of the present disclosure.

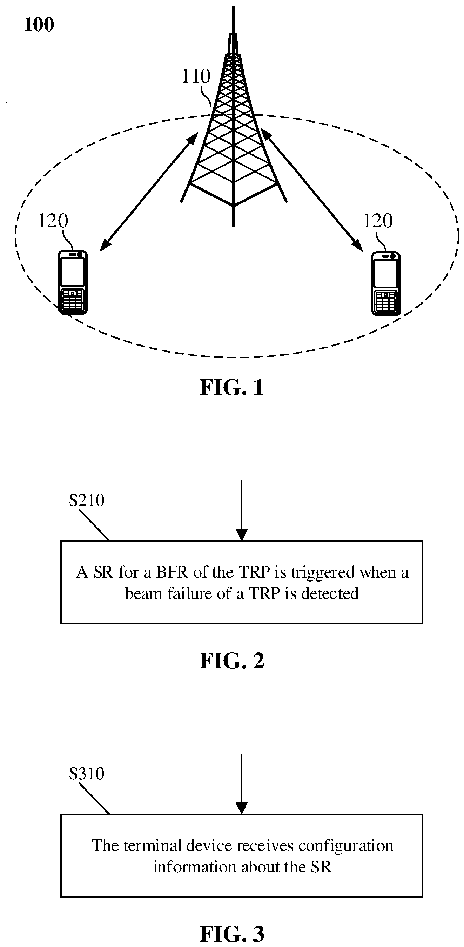

FIG. 1 exemplarily illustrates one network device 110 and two terminal devices 120. Alternatively, the wireless communication system 100 may include a plurality of network devices 110, and a coverage of the network device 110 may include other numbers of terminal devices 120, which are not limited in the embodiments of the present disclosure.

Alternatively, the wireless communication system 100 may also include other network entities, such as a Mobility Management Entity (MME), an Access and Mobility Management Function (AMF), etc, which is not limited in tje embodiments of the present disclosure.

It should be understood that the terms "system" and "network" are often used interchangeably herein. In the present disclosure, the term "and/or" is merely used for describing an association of related objects, indicates that there may be three relationships, for example, A and/or B, which means that there are three cases: A exists alone, both A and B exist, and B exists alone. In addition, the character "/" in the present disclosure generally indicates that there is "or" relationship between the related objects.

In New Radio (NR) Rel-15, Beam Failure Recovery (BFR) is standardized for Primary Cell (PCell) or Primary Secondary cell (PSCell) (collectively referred to as Special Cell (SpCell)). The UE may inform the base station through Random Access (RA), of which downlink transmission beam is used to transmit the RAR, so as to restore the downlink beam. The Random Access Preamble of NR RA is configured per Synchronous Signal Block (SSB). The UE firstly selects an index of the SSB/ Channel State Information-Reference Signal (CSI-RS) which meets the threshold value by comparing the Reference Signal Received Power (RSRP), and transmits Msg1 by using the corresponding preamble on the SSB and the Physical Random Access Channel (PRACH) resource. That is to say, after the gNB receives the preamble, which SSB to be used to feed back the Radom Access Response (RAR) may be determined.

The overall flow of the BFR may include a beam failure detection step, a new candidate beam identification step, a beam failure recovery request transmission step and a monitoring step for a network side response of the UE.

In the beam failure detection step, the physical layer determines whether the quality of the Physical Downlink Control Channel (PDCCH) corresponding to the physical layer meets a predetermined/configured threshold (Hypothetical BLER (block error rate)) by measuring the CSI-RS and/or Synchronous Signal/Physical Broadcast Channel (SS/PBCH) block. If the beam failure is detected (for example, the detected quality is worse than the threshold), a beam failure instance is reported to the Media Access Control (MAC) layer. For a MAC entity, whenever the physical layer reports a beam failure instance, the UE increases the beam failure counter BFI_COUNTER by one and restart the beam failure detection timer beamFailureDetectionTimer. If the beam failure counter BFI_COUNTER reaches a predetermined threshold during the operation of the beam failure detection timer, the beam failure is determined and a random access procedure is performed.

In the new candidate beam identification process, the UE selects a new beam that meets the predetermined/configured threshold through the CSI-RS and/or SSB (SS/PBCH block). If no new beam meeting the condition is selected, a contention-based random access procedure is adopted.

In the beam failure recovery request transmission step, the UE selects a PRACH corresponding to a new beam to initiate transmission, or reports the selected new beam through a PUCCH.

In the monitoring step for a network side response of the UE, the UE monitors the gNB response for the beam recovery failure request.

In the 3GPP R16, the BFR of the secondary cell (SCell) is introduced, and the beam failure of the SCell is indicated by the BFR MAC CE.

For the 3GPP R16, the BFR of the SCell is reported to the network side through a MAC CE, and when there is no available uplink resource, a SR is triggered to request the network side to allocate uplink resources. For the 3GPP R17, unlike SCell BFR, each cell may be configured with multiple (for example, two) PUCCH resources for the BFR of the TRP. In this case, when there is no available uplink resource to transmit the MAC CE for reporting the BFR of the TRP, how to trigger the SR is a technical problem to be solved.

FIG. 2 is a schematic flowchart of a communication method 200 according to an embodiment of the present disclosure. The method may alternatively be applied to the system illustrated in FIG. 1, for example, a terminal device in FIG. 1, but is not limited thereto. The method includes at least part of the following operations.

In operation S210, when a beam failure of a TRP is detected, a terminal device (e.g. a communication device such as the above UE) triggers a SR for a BFR of the TRP.

Therefore, the BFR in the 3GPP R17 can be supported.

Alternatively, as illustrated in FIG. 3, the above method may also include the following operation.

In operation S310, the terminal device receives configuration information about the SR.

Therefore, the configuration for the SR by the network device is implemented. The SR may be configured by the network device before triggering the SR.

Alternatively, the TRP includes at least one of a first TRP or a second TRP, and the SR includes at least one of a first SR or a second SR.

In the present disclosure, one or more TRPs (M-TRPs) may be supported, i.e. two or more TRPs may be supported. Accordingly, there may also be one or more SRs.

Alternatively, the communication method may further include at least one of the following operations before triggering the SR.

Whether the TRP is associated with the SR is determined.

Whether there is an uplink resource sufficient to accommodate a BFR Media Access Control Control Element (MAC CE) for the TRP and a header is determined.

Whether the BFR is cancelled is determined.

In the present disclosure, if it is determined that there is no available uplink resource to transmit the BFR MAC CE or the uplink resource is insufficient, the network side may be requested to allocate the uplink resource, and the SR is used to inform the network side that the uplink resource is required.

Alternatively, the SR may be one bit or more than one bit, which is not limited herein.

In the present disclosure, if it is determined that the BFR is canceled, the BFR is not performed, and accordingly, the triggering of the SR is not performed.

Alternatively, triggering the SR may include selecting at least one PUCCH resource associated with the SR to transmit the SR.

In addition, alternatively, the SR may be associated with the TRP, so that information about the TRP may be obtained through the SR.

For example, alternatively, in case that a first TRP is associated with a first SR, in response to triggering the BFR by the first TRP or triggering the BFR by a second TRP, the method further comprises one of following operation.

The first SR associated with the first TRP is triggered.

A random access procedure is triggered.

Alternatively, in the random access, the BFR MAC CE is carried in MSGA or MSG3.

Alternatively, in case that both a first TRP and a second TRP are associated with a first SR, in response to triggering the BFR by the first TRP or triggering the BFR by a second TRP, the first SR is triggered.

Alternatively, in case that a first TRP is associated with a first SR and a second TRP is associated with a second SR, in response to triggering the BFR by the first TRP or triggering the BFR by the second TRP, the method further comprises one of following operations.

The first SR is triggered.

The second SR is triggered.

Alternatively, the first SR is associated with a first PUCCH resource.

Alternatively, the first SR is associated with a first PUCCH resource and a second PUCCH resource, the first PUCCH resource corresponds to the first TRP, and the second PUCCH resource corresponds to the second TRP.

In response to triggering the BFR by the first TRP or triggering the BFR by the second TRP, the method further comprises one of following operations.

The first SR is transmitted using the first PUCCH resource corresponding to the first TRP.

The second SR is transmitted using the second PUCCH resource corresponding to the second TRP.

Alternatively, the SR may be shared by multiple logical channels.

Alternatively, a random access procedure is triggered in response to the number of retransmissions of the SR exceeding a first threshold.

In the present disclosure, if the number of retransmissions of the SR exceeds a specific value (e.g., a first threshold), a random access procedure may be triggered instead of retransmissions of the SR.

Alternatively, in case that a PUCCH resource of the SR for the BFR of the TRP is in conflict with a PUCCH resource of another SR, the PUCCH resource of the SR for the BFR of the TRP is preferentially transmitted to facilitate rapid implementation of the BFR.

Alternatively, in case that a PUCCH resource of the SR for the BFR of the TRP is in conflict with a PUCCH resource of a SR for the BFR of a SCell, the method further comprises one of following operations.

The PUCCH resource of the SR for the BFR of the TRP is preferentially transmitted.

The PUCCH resource of the SR of the BFR of the SCell is preferentially transmitted.

Based on an implementation of the terminal device, whether the PUCCH resource of the SR for the BFR of the TRP or the PUCCH resource of the SR for the BFR of the SCell is preferentially transmitted is determined.

In the present disclosure, a transmission priority may be specified in advance, or a terminal device may determine whether the PUCCH resource of the SR for the BFR of the TRP or the PUCCH resource of the SR for the BFR of the SCell is preferentially transmitted.

Alternatively, the BFR MAC CE for the TRP is used for reporting information about the beam failure of the TRP to a network side.

The BFR MAC CE may include an identifier of a TRP in which a beam failure occurs, and may also include information related to the BFR of the TRP, such as a new beam to be used (whose link quality is satisfactory or better).

Alternatively, in response to a transmitted MAC PDU including beam failure information of the TRP for triggering the SR, the SR for the BFR of the TRP is canceled. That is, there is no need to request the network side to allocate uplink resources through the SR.

Alternatively, in response to an uplink resource currently available being used for transmitting beam failure information of the TRP for triggering the SR, the method further comprises at least one of following operations.

The SR for the BFR of the TRP is cancelled.

A random access procedure for the BFR of the TRP is cancelled.

Alternatively, in response to a cell corresponding to the TRP being deactivated or a Radio Link Failure (RLF) occurring in the cell, the SR for the BFR of the TRP is canceled.

Alternatively, the TRP is indicated by an identifier of a Control Resource Set (COREST); or an identifier of a COREST pool; or an identifier of a reference signal set.

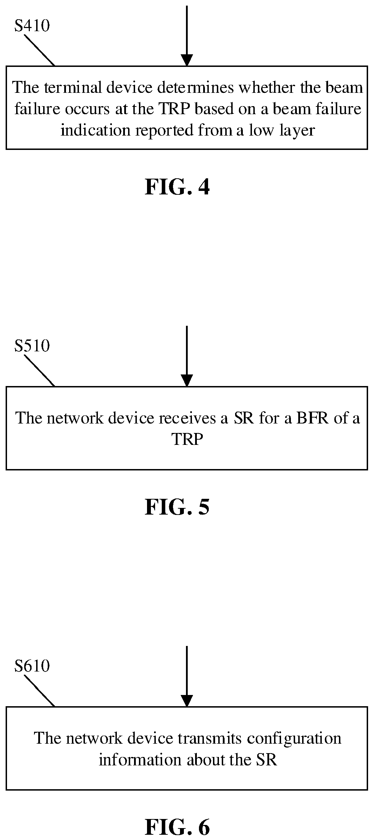

Alternatively, as illustrated in FIG. 4, the above method further includes the following operation.

In operation S410, the terminal device determines whether the beam failure occurs at the TRP based on a beam failure indication reported from a lower layer.

In the present disclosure, the operation S410 may be performed preceding the operation S310, or following the operation S310, or may even performed simultaneously with the operation S310, which is not limited in the present disclosure.

Alternatively, the operation that the terminal device determines whether the beam failure occurs at the TRP includes the following operation.

In response to a beam failure instance on the TRP reaching a second threshold during operation of a beam failure detection timer, it is determined that a beam failure occurs at the TRP.

Alternatively, a logical channel priority of the TRP BFR MAC CE may be located at any of the following locations (in order of priority from high to low):
an MAC CE of a Cell-Radio Network Temporary Identifier (C-RNTI) or an MAC CE of data from the Uplink Common Control Channel (UL-CCCH) (for example, which may be referred to as the first priority);
a Configured Grant Confirmation MAC CE or BFR MAC CE or a Multiple Entry Configured Grant Confirmation MAC CE (for example, which may be referred to as the second priority);
a Sidelink Configured Grant Confirmation MAC CE (for example, which may be referred to as the third priority);
a Listen before talk (LBT) failure MAC CE (for example, which may be referred to as the fourth priority);
an MAC CE for Sidelink Buffer Status Report (SL-BSR) (for example, which may be referred to as the fifth priority);
an MAC CE for BSR, with exception of BSR included for padding (for example, which may be referred to as the sixth priority);
a Single Entry Power Headroom Report (PHR) MAC CE or Multiple Entry PHR MAC CE (for example, which may be referred to as the seventh priority);
an MAC CE for the number of Desired Guard Symbols (for example, which may be referred to as the eighth priority);
an MAC CE for Pre-emptive BSR (for example, which may be referred to as the ninth priority);
an MAC CE for SL-BSR, with exception of SL-BSR prioritized according to clause 5.22. 1.6 and SL-BSR included for padding (for example, which may be referred to as the tenth priority);
an MAC CE of data from any Logical Channel, except data from UL-CCCH (for example, which may be referred to as the eleventh priority);
an MAC CE for Recommended bit rate query (for example, which may be referred to as the twelfth priority);
an MAC CE for BSR included for padding (for example, which may be referred to as the thirteenth priority);
an MAC CE for SL-BSR included for padding, a C-RNTI MAC CE or data from ULCCH (for example, which may be referred to as the fourteenth priority).

For example, the logical channel priority of the TRP BFR MAC CE may be the first priority, the fourteenth priority, or the priority between the first and fourteenth priority, for example, the third priority, the eighth priority, etc.

In addition, alternatively, the logical channel priority of the TRP BFR MAC CE may also be located, for example, between two adjacent priorities of the above-mentioned first to fourteenth priorities, for example, between the second priority and the third priority, i.e., between the Configured Grant Confirmation MAC CE or BFR MAC CE or Multiple Entry Configured Grant Confirmation MAC CE and the Sidelink Configured Grant Confirmation MAC CE.

The embodiments of the present disclosure provide at least one solution for 3GPP R17 to provide a SR that triggers the BFR for the TRP. By one of the above communication methods according to the embodiments of the present disclosure, the SR can be triggered when the uplink resource is insufficient, thereby obtaining the required uplink resource and realizing the BFR of the TRP.

Alternatively, according to the embodiments of the present disclosure, in case that the first SR is associated with at least one PUCCH resource, two exemplary manners are given below.

In a first example, if a first SR is associated with one PUCCH resource,
i. If only a first TRP is associated with the SR
   1. If the first TRP triggers BFR,
      a) an SR corresponding to the first TRP is triggered; or
      b) a random access is triggered (alternatively, in random access, the BFR MAC CE may be carried in MSGA or MSG3).
   2. If a second TRP triggers BFR,
      a) the SR corresponding to the first TRP is triggered, or
      b) the random access is triggered (alternatively, in the case of random access, the BFR MAC CE may be carried in MSGA or MSG3).
ii. If the first TRP and the second TRP are associated with the same SR
   1. If the first TRP triggers the BFR,
      a) the first SR is triggered.
   2. If the second TRP triggers the BFR,
      a) the first SR is triggered.
iii. If each of the first TRP and the second TRP are associated with an SR
   1. If the first TRP triggers the BFR,
      a) the SR corresponding to the first TRP is triggered; or
      b) the SR corresponding to the second TRP is triggered.
   2. If the second TRP triggers the BFR,
      a) the SR corresponding to the first TRP is triggered; or
      b) the SR corresponding to the second TRP is triggered.

Example 2: If the first SR is associated with two PUCCH resources, and the two PUCCH resources correspond to different TRPs
1. If the first TRP triggers the BFR,
   a) the SR is triggered and the PUCCH resource corresponding to the first TRP is selected; or
   b) the SR is triggered and the PUCCH resource corresponding to the second TRP is selected.
2. If the second TRP triggers the BFR,
   a) the SR is triggered and the PUCCH resource corresponding to the first TRP is selected; or
   b) the SR is triggered and the PUCCH resource corresponding to the second TRP is selected.

The communication method applied to the terminal device according to the embodiments of the present disclosure is given above and the communication method applied to the network device according to the embodiments of the present disclosure is given below.

As illustrated in FIG. 5, a communication method applied to a network device is provided and includes the following operation.

In operation S510, a SR for a BFR of a TRP is received.

The SR is triggered by a terminal device in response to a beam failure of the TRP being detected.

Alternatively, as illustrated in FIG. 6, the above communication method further includes the following operation.

In operation S610, the network device transmits configuration information about the SR, to configure the SR.

Alternatively, the TRP includes at least one of a first TRP or a second TRP, and the SR includes at least one of a first SR or a second SR.

Alternatively, before triggering the SR, the terminal device further performs at least one of the following operations.

Whether the TRP is associated with the SR is determined by the terminal device.

Whether there is an uplink resource sufficient to accommodate a BFR MAC CE for the TRP and a header is determined by the terminal device.

Whether the BFR is canceled is determined by the terminal device.

Alternatively, triggering the SR by the terminal device includes selecting at least one PUCCH resource associated with the SR to transmit the SR.

Alternatively, in case that a first TRP is associated with a first SR, in response to triggering the BFR by the first TRP or triggering the BFR by a second TRP, the method further comprises following operations performed by the terminal device.

The first SR associated with the first TRP is triggered.

A random access procedure is triggered.

Alternatively, in case that each of a first TRP and a second TRP is associated with a first SR, in response to triggering the BFR by the first TRP or triggering the BFR by a second TRP, the first SR is triggered by the terminal device.

Alternatively, in case that a first TRP is associated with a first SR and a second TRP is associated with a second SR, in response to triggering the BFR by the first TRP or triggering the BFR by the second TRP, the method further comprises one of following operations performed by the terminal device.

The first SR is triggered.

The second SR is triggered.

Alternatively, the first SR is associated with a first PUCCH resource.

Alternatively, the first SR is associated with a first PUCCH resource and a second PUCCH resource, the first PUCCH resource corresponds to the first TRP, and the second PUCCH resource corresponds to the second TRP.

In response to triggering the BFR by the first TRP or triggering the BFR by the second TRP, the method further comprises one of following operations performed by the terminal device.

The first SR is transmitted using the first PUCCH resource corresponding to the first TRP.

The second SR is transmitted using the second PUCCH resource corresponding to the second TRP.

Alternatively, in the random access, the BFR MAC CE is carried in a message MSGA or a message MSG3.

Alternatively, the SR is shared by multiple logical channels.

Alternatively, in response to the number of retransmissions of the SR exceeding a first threshold, a random access procedure is triggered by the terminal device.

Alternatively, in case that a PUCCH resource of the SR for the BFR of the TRP is in conflict with a PUCCH resource of another SR, the PUCCH resource of the SR for the BFR of the TRP is preferentially transmitted.

Alternatively, in case that a PUCCH resource of the SR for the BFR of the TRP is in conflict with a PUCCH resource of a SR for a BFR of a SCell, the method further comprises one of following operations.

The PUCCH resource of the SR for the BFR of the TRP is preferentially transmitted.

The PUCCH resource of the SR for the BFR of the SCell is preferentially transmitted.

Based on an implementation of the terminal device, whether the PUCCH resource of the SR for the BFR of the TRP or the PUCCH resource of the SR for the BFR of the SCell is preferentially transmitted is determined.

Alternatively, the BFR MAC CE for the TRP is used for reporting information about the beam failure of the TRP to a network side.

Alternatively, in response to a transmitted MAC PDU including beam failure information of the TRP for triggering the SR, the SR for the BFR for the TRP is canceled by the terminal device.

Alternatively, in response to an uplink resource currently available being used for transmitting beam failure information of the TRP for triggering the SR, the method further comprises at least one of following operations.

The SR for the BFR of the TRP is cancelled.

A random access procedure for the BFR of the TRP is cancelled.

Alternatively, in response to a cell corresponding to the TRP being deactivated or a Radio Link Failure (RLF) occurring in the cell, the SR for the BFR of the TRP is canceled by the terminal device.

Alternatively, the TRP is indicated by an identifier of a Control Resource Set (COREST); or an identifier of a COREST pool; or an identifier of a reference signal set.

Alternatively, the terminal device determines whether the beam failure occurs at the TRP based on a beam failure indication reported from a lower layer.

Alternatively, the operation that the terminal device determines whether the beam failure occurs at the TRP includes the following operation.

In response to a beam failure instance on the TRP reaching a second threshold during an operation of a beam failure detection timer, the terminal device determines that the beam failure occurs at the TRP.

The embodiments of the present disclosure provide at least one solution for 3GPP R17 to provide a SR that triggers the BFR for the TRP. By one of the above communication methods according to the embodiments of the present disclosure, the SR can be triggered when the uplink resource is insufficient, thereby obtaining the required uplink resource and realizing the BFR of the TRP.

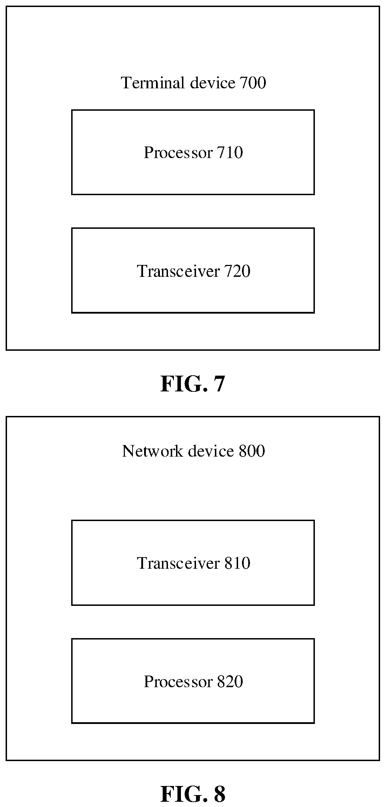

FIG. 7 illustrates a schematic block diagram of a terminal device according to an embodiment of the present disclosure.

As illustrated in FIG. 7, the terminal device 700 according to an embodiment of the present disclosure may include, for example, a processor 710. The processor 710 is configured to trigger a SR for a BFR of a TRP in response to a beam failure of the TRP being detected.

In addition, alternatively, the terminal device 700 according to an embodiment of the present disclosure may further include, for example, a transceiver 720. The transceiver 720 may be configured to receive configuration information about the SR.

It should be understood that the operations and/or functions of the respective devices, units, modules, etc. (e.g. the processor 710 and transceiver 720, etc. described above) in the terminal device according to the embodiment of the present disclosure respectively realizes the corresponding operations and/or functions performed by the terminal device in the communication method described above. For the sake of brevity, elaborations are omitted herein.

FIG. 8 illustrates a schematic block diagram of a network device according to an embodiment of the present disclosure.

As illustrated in FIG. 8, the network device 800 according to an embodiment of the present disclosure may include, for example, a transceiver 810. The transceiver 810 is configured to receive a SR for a BFR of a TRP. The SR is triggered by a terminal device in response to a beam failure of the TRP being detected.

In addition, alternatively, the network device 800 according to the embodiment of the present disclosure may further include, for example, a processor 820. The processor 820 is configured to determine above configuration information for transmitting to the terminal device.

It should be understood that the operations and/or functions of the respective devices, units, modules, etc. (e.g. the transceiver 810, and the processor 820 etc. described above) in the network device according to the embodiment of the present disclosure respectively realize the corresponding operations and/or functions performed by the network device in the communication method described above. For the sake of brevity, elaborations are omitted herein.

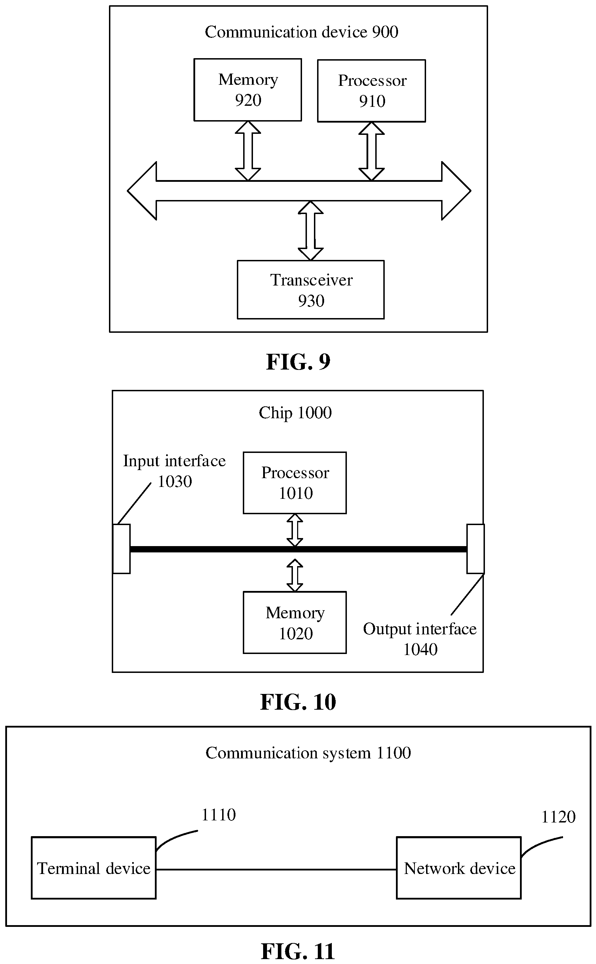

FIG. 9 is a schematic structural diagram of a communication device 900 according to an embodiment of the present disclosure. The communication device 900 illustrated in FIG. 9 may include a processor 910 and a memory 920.

The processor 910 may invoke and run a computer program from the memory 920 to implement the communication method in embodiments of the present disclosure.

The memory 920 may be a separate device independent of the processor 910 or may be integrated in the processor 910.

Alternatively, as illustrated in FIG. 9, the communication device 900 may further include a transceiver 930. The processor 910 may control the transceiver 930 to communicate with other devices, and in particular may transmit information or data to or receive information or data from other devices.

The transceiver 930 may include a transmitter and a receiver. The transceiver 930 may further include antennas, the number of which may be one or more.

Alternatively, the communication device 900 may be a network device of the embodiments of the present disclosure, and the communication device 900 may implement the corresponding flows implemented by the network device in various communication methods of the embodiments of the present disclosure. For the sake of brevity, elaborations are omitted herein.

Alternatively, the communication device 900 may be a terminal device of the embodiments of the present disclosure, and the communication device 900 may implement the corresponding flows implemented by the terminal device in various communication methods of the embodiments of the present disclosure. For the sake of brevity, elaborations are omitted herein.

FIG. 10 is a schematic structural diagram of a chip 1000 according to an embodiment of the present disclosure. The chip 1000 illustrated in FIG. 10 may include a processor 1010 and a memory 1020. The processor 1010 may invoke and run a computer program from the memory to implement the methods in embodiments of the present disclosure. The memory 1020 may be a separate device independent of the processor 1010 or may be integrated in the processor 1010.

Alternatively, the chip 1000 may further include an input interface 1030. The processor 1010 may control the input interface 1030 to communicate with other devices or chips, and in particular may obtain information or data sent by other devices or chips.

Alternatively, the chip 1000 may further include an output interface 1040. The processor 1010 may control the output interface 1040 to communicate with other devices or chips, and in particular may output information or data to other devices or chips.

Alternatively, the chip may be applied to the network device in the embodiments of the present disclosure, and the chip may implement the corresponding flows realized by the network device in various communication methods of the embodiments of the present disclosure. For the sake of brevity, elaborations are omitted herein.

Alternatively, the chip may be applied to the terminal device in the embodiments of the present disclosure, and the chip may implement the corresponding flows realized by the terminal device in various communication methods of the embodiments of the present disclosure. For the sake of brevity, elaborations are omitted herein.

It should be understood that the chips in embodiments of the present disclosure may also be a system level chip, system chip, chip system, or system-on-chip or the like.

The processor mentioned above may be a general purpose processor, a digital signal processor (DSP), a field programmable gate array (FPGA), an application specific integrated circuit (ASIC), or other programmable logic devices, transistor logic devices, discrete hardware components, and the like. The general purpose processor mentioned above may be a microprocessor or any conventional processor or the like.

The memory mentioned above may be a volatile memory or a non-volatile memory, or may include both a volatile memory and a non-volatile memory. The non-volatile memory may be a read-only memory (ROM), a programmable ROM (PROM), an erasable PROM (EPROM), an electrically EPROM (EEPROM) or a flash memory. The volatile memory may be a random access memory (RAM).

It should be understood that the memory described above is exemplary, but not restrictive, and, for example, the memory in embodiments of the present disclosure may also be static RAM (SRAM), dynamic RAM (DRAM), synchronous DRAM (SDRAM), double data rate SDRAM (DDR SDRAM), enhanced SDRAM (ESDRAM), synch link DRAM (SLDRAM), Direct Rambus RAM (DR RAM), etc. That is, the memory in embodiments of the present disclosure is intended to include but not limited to these and any other suitable types of memory.

FIG. 11 is a schematic block diagram of a communication system 1100 according to an embodiment of the present disclosure. As shown in FIG. 17, the communication system 1100 may include a terminal device 1110 and a network device 1120.

The terminal device 1110 may be used to implement the corresponding function realized by the terminal device in the above communication method, or may be the above terminal device or the communication device as the terminal device. The network device 1120 may be used to implement the corresponding function implemented by the network device in the above communication method, or may be the above network device or the communication device as the terminal device. For the sake of brevity, elaborations are omitted herein.

The above-described embodiments may be implemented in whole or in part by software, hardware, firmware or any combination thereof. When implemented in software, it may be implemented in whole or in part in the form of a computer program product. The computer program product includes one or more computer instructions. When the computer program instructions are loaded and executed on a computer, the flows or functions described in accordance with embodiments of the present disclosure is generated in whole or in part. The computer may be a general purpose computer, a special purpose computer, a computer network, or other programmable device. The computer instructions may be stored in a computer-readable storage medium, or be transmitted from a computer-readable storage medium to another computer-readable storage medium. For example, the computer instructions may be transmitted from a Web site, computer, server, or data center to another Web site, computer, server, or data center via wired (e.g. a Coaxial cable, optical fiber, Digital Subscriber Line (DSL)) or wireless (e.g. Infrared, wireless, microwave, etc.). The computer-readable storage medium may be any usable medium accessible by a computer or a data storage device such as a server, data center, etc. integrate with one or more usable mediums. The usable media may be a magnetic medium (e.g. a Floppy disk, a hard disk, a magnetic tape), an optical media (e.g. DVD), or a semiconductor media (e.g. Solid State Disk (SSD)), etc.

It should be understood that in various embodiments of the present disclosure, the sequence numbers of the above-mentioned processes do not mean the order of execution, and the execution order of various processes should be determined by the function and inherent logic thereof, and should not considered as limitation to the implementation of the embodiments of the present disclosure.

Those skilled in the art will clearly appreciate that, for convenience and conciseness of description, the specific operating processes of the above-described systems, devices and units may refer to the corresponding processes in the aforementioned method embodiments, and will not be elaborated herein again.

The above description is only the specific embodiments of the present disclosure, but the scope of protection of the present disclosure is not limited thereto. Changes or substitutions easily conceived by any person skilled in the art within the technical scope of the present disclosure should fall within the scope of protection of the present disclosure. Therefore, the protection scope of the present disclosure should conform to the protection scope of the claims.

## Claims

1. A communication method, applicable to a terminal device, the method comprising:
triggering, in response to a beam failure of a Transmission and Reception Point (TRP) being detected, a Scheduling Request (SR) for a Beam Failure Recovery (BFR) of the TRP.

2. The method of claim 1, further comprising:
receiving, by the terminal device, configuration information about the SR.

3. The method of claim 1 or 2, wherein the TRP comprises at least one of a first TRP or a second TRP, and the SR comprises at least one of a first SR or a second SR.

4. The method of any one of claims 1 to 3, further comprising: before the triggering the SR, at least one of:
determining whether the TRP is associated with the SR;
determining whether there is an uplink resource sufficient to accommodate a BFR Media Access Control Control Element (MAC CE) for the TRP and a header; or
determining whether the BFR is canceled.

5. The method of any one of claims 1 to 4, wherein triggering the SR comprises selecting at least one Physical Uplink Control Channel (PUCCH) resource associated with the SR to transmit the SR.

6. The method of claim 3, further comprising: in case that a first TRP is associated with the first SR, in response to triggering the BFR by the first TRP or triggering the BFR by the second TRP,
triggering the first SR associated with the first TRP; or
triggering a random access procedure.

7. The method of claim 3, wherein in case that each of a first TRP and a second TRP is associated with the first SR, in response to triggering the BFR by the first TRP or triggering the BFR by a second TRP, the first SR is triggered.

8. The method of claim 3, further comprising: in case that the first TRP is associated with the first SR and the second TRP is associated with the second SR, in response to triggering the BFR by the first TRP or triggering the BFR by the second TRP,
triggering the first SR; or
triggering the second SR.

9. The method of any one of claims 6 to 8, wherein the first SR is associated with a first Physical Uplink Control Channel (PUCCH) resource.

10. The method of claim 3, wherein the first SR is associated with a first Physical Uplink Control Channel (PUCCH) resource and a second PUCCH resource, the first PUCCH resource corresponds to the first TRP, and the second PUCCH resource corresponds to the second TRP;
wherein the method further comprises: in response to triggering the BFR by the first TRP or triggering the BFR by the second TRP,
transmitting the first SR using the first PUCCH resource corresponding to the first TRP; or
transmitting the second SR using the second PUCCH resource corresponding to the second TRP.

11. The method of claim 6, wherein in the random access, the BFR MAC CE is carried in a message MSGA or a message MSG3.

12. The method of any one of claims 1 to 11, wherein the SR is shared by a plurality of logical channels.

13. The method of any one of claims 1 to 12, further comprising:
triggering, in response to a number of retransmissions of the SR exceeding a first threshold, a random access procedure.

14. The method of any one of claims 1 to 13, wherein in case that a Physical Uplink Control Channel (PUCCH) resource of the SR for the BFR of the TRP is in conflict with a PUCCH resource of another SR, the PUCCH resource of the SR for the BFR of the TRP is preferentially transmitted.

15. The method of any one of claims 1 to 14, further comprising: in case that a Physical Uplink Control Channel (PUCCH) resource of the SR for the BFR of the TRP is in conflict with a PUCCH resource of a SR for a BFR of a secondary cell (SCell),
preferentially transmitting the PUCCH resource of the SR for the BFR of the TRP; or
preferentially transmitting the PUCCH resource of the SR for the BFR of the SCell; or
determining whether the PUCCH resource of the SR for the BFR of the TRP or the PUCCH resource of the SR for the BFR of the SCell is preferentially transmitted based on an implementation of the terminal device.

16. The method of claim 4 or 11, wherein the BFR MAC CE for the TRP is used for reporting information about the beam failure of the TRP to a network side.

17. The method of any one of claims 1 to 16, further comprising: in response to a transmitted Medium Access Control Packet Data Unit (MAC PDU) comprising beam failure information of the TRP for triggering the SR, cancelling the SR for the BFR of the TRP.

18. The method of any one of claims 1 to 16, further comprising: in response to an uplink resource currently available being used for transmitting beam failure information of the TRP for triggering the SR, at least one of:
canceling the SR for the BFR of the TRP; or
canceling a random access procedure for the BFR of the TRP.

19. The method of any one of claims 1 to 16, further comprising: in response to a cell corresponding to the TRP being deactivated or a Radio Link Failure (RLF) occurring in the cell, cancelling the SR for the BFR of the TRP.

20. The method of any one of claims 1 to 19, wherein the TRP is indicated by:
an identifier of a Control Resource Set (COREST); or
an identifier of a COREST pool; or
an identifier of a reference signal set.

21. The method of any one of claims 1 to 20, further comprising:
determining, by the terminal device, whether the beam failure occurs at the TRP based on a beam failure indication reported from a lower layer.

22. The method of claim 21, wherein determining, by the terminal device, whether the beam failure occurs at the TRP comprises:
in response to a beam failure instance on the TRP reaching a second threshold during an operation of a beam failure detection timer, determining that the beam failure occurs at the TRP.

23. A communication method, applicable to a network device, the method comprising:
receiving a Scheduling Request (SR) for a Beam Failure Recovery (BFR) of a Transmission and Reception Point (TRP), wherein the SR is triggered by a terminal device in response to a beam failure of the TRP being detected.

24. The method of claim 23, further comprising:
transmitting, by the network device, configuration information about the SR.

25. The method of claim 23 or 24, wherein the TRP comprises at least one of a first TRP or a second TRP, and the SR comprises at least one of a first SR or a second SR.

26. The method of any one of claims 23 to 25, further comprising: before the SR is triggered by the terminal device, at least one of:
determining, by the terminal device, whether the TRP is associated with the SR;
determining, by the terminal device, whether there is an uplink resource sufficient to accommodate a BFR Media Access Control Control Element (MAC CE) for the TRP and a header; or
determining, by the terminal device, whether the BFR is canceled.

27. The method of any one of claims 23 to 26, wherein triggering the SR by the terminal device comprises selecting at least one Physical Uplink Control Channel (PUCCH) resource associated with the SR to transmit the SR.

28. The method of claim 25, further comprising: in case that the first TRP is associated with the first SR, in response to triggering the BFR by the first TRP or triggering the BFR by the second TRP:
triggering, by the terminal device, the first SR associated with the first TRP; or
triggering, by the terminal device, a random access procedure.

29. The method of claim 25, wherein in case that each of a first TRP and a second TRP is associated with the first SR, in response to triggering the BFR by the first TRP or triggering the BFR by a second TRP, the first SR is triggered by the terminal device.

30. The method of claim 25, further comprising: in case that the first TRP is associated with the first SR and the second TRP is associated with the second SR, in response to triggering the BFR by the first TRP or triggering the BFR by the second TRP,
triggering, by the terminal device, the first SR; or
triggering, by the terminal device, the second SR.

31. The method of any one of claims 28 to 30, wherein the first SR is associated with a first Physical Uplink Control Channel (PUCCH) resource.

32. The method of claim 25, wherein the first SR is associated with a first Physical Uplink Control Channel (PUCCH) resource and a second PUCCH resource, the first PUCCH resource corresponds to the first TRP, and the second PUCCH resource corresponds to the second TRP,
wherein the method further comprises: in response to triggering the BFR by the first TRP or triggering the BFR by the second TRP,
transmitting, by the terminal device, the first SR using the first PUCCH resource corresponding to the first TRP; or
transmitting, by the terminal device, the second SR using the second PUCCH resource corresponding to the second TRP.

33. The method of claim 28, wherein in the random access, the BFR MAC CE is carried in a message MSGA or a message MSG3.

34. The method of any one of claims 23 to 33, wherein the SR is shared by a plurality of logical channels.

35. The method of any one of claims 23 to 34, wherein in response to a number of retransmissions of the SR exceeding a first threshold, a random access procedure is triggered by the terminal device.

36. The method of any one of claims 23 to 35, wherein in case that a Physical Uplink Control Channel (PUCCH) resource of the SR for the BFR of the TRP is in conflict with a PUCCH resource of another SR, the PUCCH resource of the SR for the BFR of the TRP is preferentially transmitted.

37. The method of any one of claims 23 to 36, further comprising: in case that a Physical Uplink Control Channel (PUCCH) resource of the SR for the BFR of the TRP is in conflict with a PUCCH resource of a SR for a BFR of a secondary cell (SCell),
preferentially transmitting the PUCCH resource of the SR for the BFR of the TRP; or
preferentially transmitting the PUCCH resource of the SR for the BFR of the SCell; or
determining whether the PUCCH resource of the SR for the BFR of the TRP or the PUCCH resource of the SR for the BFR of the SCell is preferentially transmitted based on an implementation of the terminal device.

38. The method of claim 26 or 33, wherein the BFR MAC CE for the TRP is used for reporting information about the beam failure of the TRP to a network side.

39. The method of any one of claims 23 to 38, wherein in response to a transmitted Medium Access Control Packet Data Unit (MAC PDU) comprising beam failure information of the TRP for triggering the SR, the SR for the BFR of the TRP is canceled by the terminal device.

40. The method of any one of claims 23 to 38, further comprising: in response to an uplink resource currently available being used for transmitting beam failure information of the TRP for triggering the SR, at least one of:
canceling, by the terminal device, the SR for the BFR of the TRP; or
canceling, by the terminal device, a random access procedure for the BFR of the TRP.

41. The method of any one of claims 23 to 38, further comprising: in response to a cell corresponding to the TRP being deactivated or a Radio Link Failure (RLF) occurring in the cell, cancelling, by the terminal device, the SR for the BFR of the TRP.

42. The method of any one of claims 23 to 41, wherein the TRP is indicated by
an identifier of a Control Resource Set (COREST); or
an identifier of a COREST pool; or
an identifier of a reference signal set.

43. The method of any one of claims 23 to 42, wherein the terminal device determines whether the beam failure occurs at the TRP based on a beam failure indication reported from a lower layer.

44. The method of claim 43, wherein the determining whether the beam failure occurs at the TRP by the terminal device comprises:
determining, in response to a beam failure instance on the TRP reaching a second threshold during an operation of a beam failure detection timer, that the beam failure occurs at the TRP by the terminal device.

45. A terminal device comprising:
a processor configured to trigger, in response to a beam failure of the TRP being detected, a Scheduling Request (SR) for a Beam Failure Recovery (BFR) of a Transmission and Reception Point (TRP).

46. The device of claim 45, further comprising:
a transceiver configured to receive configuration information about the SR.

47. The device of claim 45 or 46, wherein the TRP comprises at least one of a first TRP or a second TRP, and the SR comprises at least one of a first SR or a second SR.

48. The device of any one of claims 45 to 47, wherein the processor is further configured to, before the triggering the SR, perform at least one of:
determining whether the TRP is associated with the SR;
determining whether there is an uplink resource sufficient to accommodate a BFR Media Access Control Control Element (MAC CE) for the TRP and a header; or
determining whether the BFR is canceled.

49. The device of any one of claims 45 to 48, wherein the processor is configured to select at least one Physical Uplink Control Channel (PUCCH) resource associated with the SR to transmit the SR.

50. The device of claim 47, wherein in case that a first TRP is associated with the first SR, in response to triggering the BFR by the first TRP or triggering the BFR by the second TRP, the processor is configured to perform:
triggering the first SR associated with the first TRP; or
triggering a random access procedure.

51. The device of claim 47, wherein in case that each of a first TRP and a second TRP is associated with the first SR, in response to triggering the BFR by the first TRP or triggering the BFR by a second TRP, the processor is configured to trigger the first SR.

52. The device of claim 47, wherein in case that the first TRP is associated with the first SR and the second TRP is associated with the second SR, in response to triggering the BFR by the first TRP or triggering the BFR by the second TRP, the processor is configured to perform:
triggering the first SR; or
triggering the second SR.

53. The device of any one of claims 50 to 52, wherein the first SR is associated with a first Physical Uplink Control Channel (PUCCH) resource.

54. The device of claim 47, wherein the first SR is associated with a first Physical Uplink Control Channel (PUCCH) resource and a second PUCCH resource, the first PUCCH resource corresponds to the first TRP, and the second PUCCH resource corresponds to the second TRP,
wherein, in response to triggering the BFR by the first TRP or triggering the BFR by the second TRP, the processor is configured to perform:
transmitting the first SR using the first PUCCH resource corresponding to the first TRP; or
transmitting the second SR using the second PUCCH resource corresponding to the second TRP.

55. The device of claim 50, wherein in the random access, the BFR MAC CE is carried in a message MSGA or a message MSG3.

56. The device of any one of claims 45 to 55, wherein the SR is shared by a plurality of logical channels.

57. The device of any one of claims 45 to 56, wherein the processor is configured to trigger a random access procedure in response to a number of retransmissions of the SR exceeding a first threshold.

58. The device of any one of claims 45 to 57, wherein in case that a Physical Uplink Control Channel (PUCCH) resource of the SR for the BFR of the TRP is in conflict with a PUCCH resource of another SR, the processor is configured to control to preferentially transmit the PUCCH resource of the SR for the BFR of the TRP.

59. The device of any one of claims 45 to 58, wherein in case that a Physical Uplink Control Channel (PUCCH) resource of the SR for the BFR of the TRP is in conflict with a PUCCH resource of a SR for a BFR of a secondary cell (SCell), the processor is configured to perform:
preferentially transmitting the PUCCH resource of the SR for the BFR of the TRP; or
preferentially transmitting the PUCCH resource of the SR for the BFR of the SCell; or
determining whether the PUCCH resource of the SR for the BFR of the TRP or the PUCCH resource of the SR for the BFR of the SCell is preferentially transmitted based on an implementation of the terminal device.

60. The device of claim 48 or 55, wherein the BFR MAC CE for the TRP is used for reporting information about the beam failure of the TRP to a network side.

61. The device of any one of claims 45 to 60, wherein in response to a transmitted Medium Access Control Packet Data Unit (MAC PDU) comprising beam failure information of the TRP for triggering the SR, the terminal device is configured to cancel the SR for the BFR of the TRP.

62. The device of any one of claims 45 to 60, wherein in response to an uplink resource currently available being used for transmitting beam failure information of the TRP for triggering the SR, the terminal device is configured to perform at least one of:
canceling the SR for the BFR of the TRP; or
canceling a random access procedure for the BFR of the TRP.

63. The device of any one of claims 45 to 60, wherein, in response to a cell corresponding to the TRP being deactivated or a Radio Link Failure (RLF) occurring in the cell, the terminal device is configured to cancel the SR for the BFR of the TRP.

64. The device of any one of claims 45 to 63, wherein the TRP is indicated by:
an identifier of a Control Resource Set (COREST); or
an identifier of a COREST pool; or
an identifier of a reference signal set.

65. The device of any one of claims 45 to 64, wherein the terminal device determines whether the beam failure occurs at the TRP based on a beam failure indication reported from a lower layer.

66. The device of claim 65, wherein the terminal device determines that the beam failure occurs at the TRP in response to a beam failure instance on the TRP reaching a second threshold during an operation of a beam failure detection timer.

67. A network device, comprising:
a transceiver, configured to receive a Scheduling Request (SR) for a Beam Failure Recovery (BFR) of a Transmission and Reception Point (TRP), wherein the SR is triggered by a terminal device in response to a beam failure of the TRP being detected.

68. The device of claim 67, wherein the transceiver is further configured to transmit configuration information about the SR.

69. The device of claim 67 or 68, wherein the TRP comprises at least one of a first TRP or a second TRP, and the SR comprises at least one of a first SR or a second SR.

70. The device of any one of claims 67 to 69, wherein before the SR is triggered by the terminal device, the terminal device further performs at least one of:
determining whether the TRP is associated with the SR;
determining whether there is an uplink resource sufficient to accommodate a BFR Media Access Control Control Element (MAC CE) for the TRP and a header; or
determining whether the BFR is canceled.

71. The device of any one of claims 67 to 70, wherein at least one Physical Uplink Control Channel (PUCCH) resource associated with the SR is selected by the terminal device to transmit the SR.

72. The device of claim 69, wherein in case that the first TRP is associated with the first SR, and in response to triggering the BFR by the first TRP or triggering the BFR by the second TRP, the terminal device is configured to perform:
triggering the first SR associated with the first TRP; or
triggering a random access procedure.

73. The device of claim 69, wherein in case that each of a first TRP and a second TRP is associated with the first SR, in response to triggering the BFR by the first TRP or triggering the BFR by a second TRP, the first SR is triggered by the terminal device.

74. The device of claim 69, wherein in case that the first TRP is associated with the first SR and the second TRP is associated with the second SR, in response to triggering the BFR by the first TRP or triggering the BFR by the second TRP, the terminal device is configured to perform:
triggering the first SR; or
triggering the second SR.

75. The device of any one of claims 72 to 74, wherein the first SR is associated with a first Physical Uplink Control Channel (PUCCH) resource.

76. The device of claim 69, wherein the first SR is associated with a first Physical Uplink Control Channel (PUCCH) resource and a second PUCCH resource, the first PUCCH resource corresponds to the first TRP, and the second PUCCH resource corresponds to the second TRP,
wherein in response to triggering the BFR by the first TRP or triggering the BFR by the second TRP, the terminal device is configured to perform:
transmitting the first SR using the first PUCCH resource corresponding to the first TRP; or
transmitting the second SR using the second PUCCH resource corresponding to the second TRP.

77. The device of claim 72, wherein in the random access, the BFR MAC CE is carried in a message MSGA or a message MSG3.

78. The device of any one of claims 67 to 77, wherein the SR is shared by a plurality of logical channels.

79. The device of any one of claims 67 to 78, wherein in response to a number of retransmissions of the SR exceeding a first threshold, a random access procedure is triggered by the terminal device.

80. The device of any one of claims 67 to 79, wherein in case that a Physical Uplink Control Channel (PUCCH) resource of the SR for the BFR of the TRP is in conflict with a PUCCH resource of another SR, the PUCCH resource of the SR for the BFR of the TRP is preferentially transmitted.

81. The device of any one of claims 67 to 80, wherein in case that a Physical Uplink Control Channel (PUCCH) resource of the SR for the BFR of the TRP is in conflict with a PUCCH resource of a SR for a BFR of a secondary cell (SCell), the device is configured to perform:
preferentially transmitting the PUCCH resource of the SR for the BFR of the TRP; or
preferentially transmitting the PUCCH resource of the SR for the BFR of the SCell; or
determining whether the PUCCH resource of the SR for the BFR of the TRP or the PUCCH resource of the SR for the BFR of the SCell is preferentially transmitted based on an implementation of the terminal device.

82. The device of claim 70 or 77, wherein the BFR MAC CE for the TRP is used for reporting information about the beam failure of the TRP to a network side.

83. The device of any one of claims 67 to 82, wherein, in response to a transmitted Medium Access Control Packet Data Unit (MAC PDU) comprising beam failure information of the TRP for triggering the SR, the terminal device cancels the SR for the BFR of the TRP.

84. The device of any one of claims 67 to 82, wherein in response to an uplink resource currently available being used for transmitting beam failure information of the TRP for triggering the SR, the terminal device is configured to perform at least one of:
canceling the SR for the BFR of the TRP; or
canceling a random access procedure for the BFR of the TRP.

85. The device of any one of claims 67 to 82, wherein in response to a cell corresponding to the TRP being deactivated or a Radio Link Failure (RLF) occurring in the cell, the terminal device cancels the SR for the BFR of the TRP.

86. The device of any one of claims 67 to 85, wherein the TRP is indicated by:
an identifier of a Control Resource Set (COREST); or
an identifier of a COREST pool; or
an identifier of a reference signal set.

87. The device of any one of claims 67 to 86, wherein the terminal device determines whether the beam failure occurs at the TRP based on a beam failure indication reported from a lower layer.

88. The device of claim 87, wherein the terminal device determines that the beam failure occurs at the TRP in response to a beam failure instance on the TRP reaching a second threshold during an operation of a beam failure detection timer.

89. A terminal device comprising a transceiver, a processor and a memory, wherein the memory is configured to store a computer program, and the processor is configured to invoke and run the computer program stored in the memory to perform the communication method of any one of claims 1 to 22.

90. A network device comprising a transceiver, a processor and a memory, wherein the memory is configured to store a computer program, and the processor is configured to invoke and run the computer program stored in the memory to perform the communication method of any one of claims 23 to 44.

91. A communication system, comprising:
at least one terminal device of any one of claims 45 to 66 and 89; and
at least one network device of any one of claims 67 to 88 and 90.

92. A chip comprising a processor for invoking and running a computer program from a memory to cause a device on which the chip is mounted to perform the communication method of any one of claims 1 to 22.

93. A chip comprising a processor for invoking and running a computer program from a memory to cause a device on which the chip is mounted to perform the communication method of any one of claims 23 to 44.

94. A computer-readable storage medium for storing a computer program that causes a computer to perform the communication method of any one of claims 1 to 22.

95. A computer-readable storage medium for storing a computer program that causes a computer to perform the communication method of any one of claims 23 to 44.

96. A computer program product comprising computer program instructions causing a computer to perform the communication method of any one of claims 1 to 22.

97. A computer program product comprising computer program instructions causing a computer to perform the communication method of any one of claims 23 to 44.

98. A computer program causing a computer to perform the communication method of any one of claims 1 to 22.

99. A computer program causing a computer to perform the communication method of any one of claims 23 to 44.
